# EUROPEAN PATENT APPLICATION

(11) **EP 2 511 118 A1**
(43) Date of publication of application: **17.10.2012**
(21) Application number: 11425116.8
(22) Date of filing: 22.04.2011
(51) Int. Cl.: B60K 6/10

(54) **Unidirectional and bidirectional free wheel applied on the transmission shaft of the motor vehicle.**

(30) Priority: 28.04.2010 IT RG20100002
(71) Applicant: Fiorilla, Giuseppe, 97019 Vittoria (RG) (IT)
(72) Inventor: Fiorilla, Giuseppe, 97019 Vittoria (RG) (IT)

(57) **Abstract**

A unidirectional and bidirectional free wheel which, when the driver decelerates the motor , uncouples the wheel drive automatically, and the motor vehicle keeps on moving at speed of inertia and freely.

## Description

Today the circulating motor vehicles create some big problems: pollution and strong fuel consumption. Despite industries have produced motor vehicles which consume less fuel and pollute less, the damages to the environment continue, day after day, to increase because new motor vehicles are continuously put into circulation on the market.

The strong application of motor vehicles from young licenses puts in crisis all the world states, both for the strong damage caused by pollution, and for the consumption of oil prohibitive price.

The aforesaid problems are caused both from the motor vehicles with small engines and from those of displacement engines (e.g. trucks) which go more and more fast, both in the urban roads and in the highways and that, in order to maintain the speed for long distance, need to maintain high rpm with enormous fuel consumption.

When the motor vehicle reaches the safe speed, the driver cannot decelerate the motor bringing it to idling speed because the motor vehicle slows down and stops, since the wheel drives are connected with engine speed. Accordingly, all that causes an enormous fuel consumption, hence more pollution for our environment.

### GOAL THAT THE INNOVATION PRETENTS TO ACHIEVE

The problem is resolved with the invention of the unidirectional and bidirectional free Wheel (tav. 2 fig. 1), applied to the transmission shaft of the motor vehicle, between the gearbox (tav. 1 fig. 5) and the wheel drives(tav. 1 fig. 8).

The mechanism of the unidirectional free wheel, during acceleration, allows to join the wheel drives (tav. 1 fig. 8) of the motor vehicle with the motor automatically in order to make the motor vehicle move at speeds, both by engine and by inertia. Once reached the safe speed, the driver that wants to economize fuel, decelerates the motor and the mechanism of the unidirectional free wheel decouples the wheel drives from the engine automatically (tav. 1 fig. 8) and the motor vehicle keeps on moving at speeds for inertia without the intervention of the motor and, thanks to the unidirectional free wheel, economizes fuel.

### OPERATION OF THE BIDIRECTIONAL WHEEL

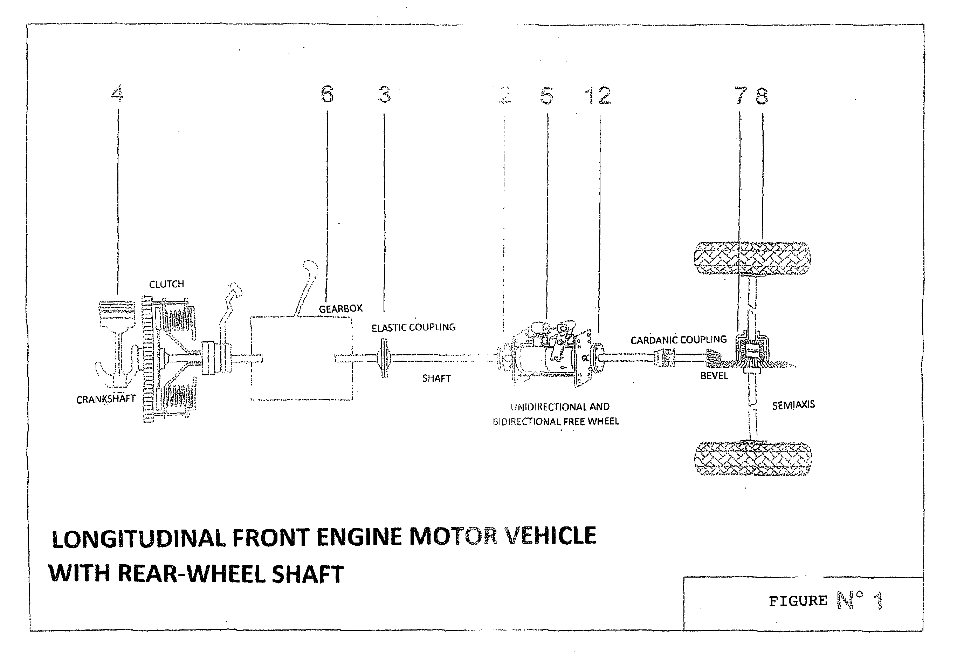

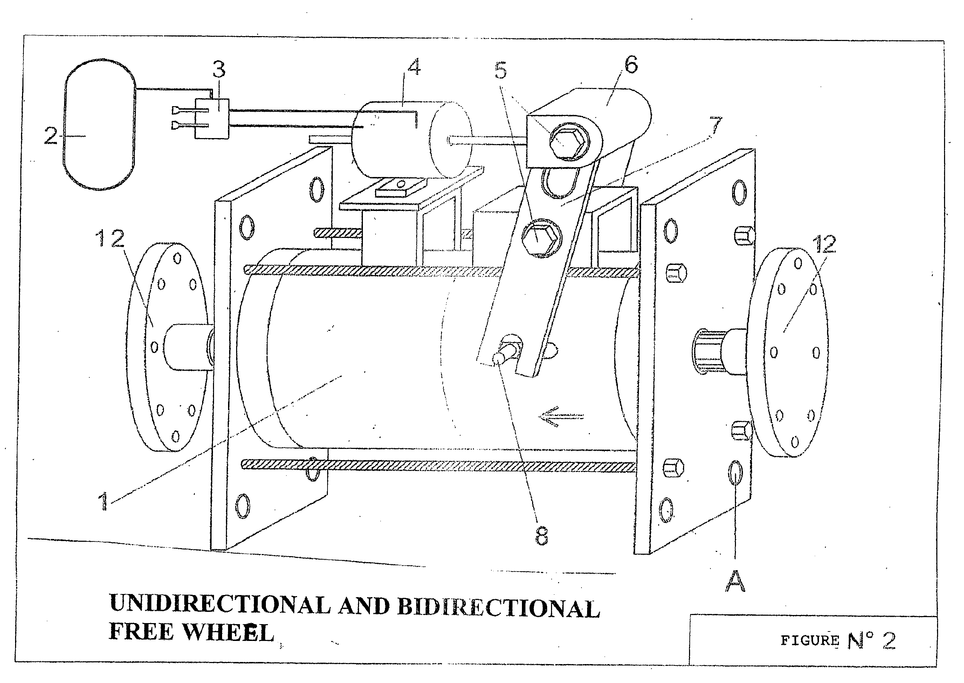

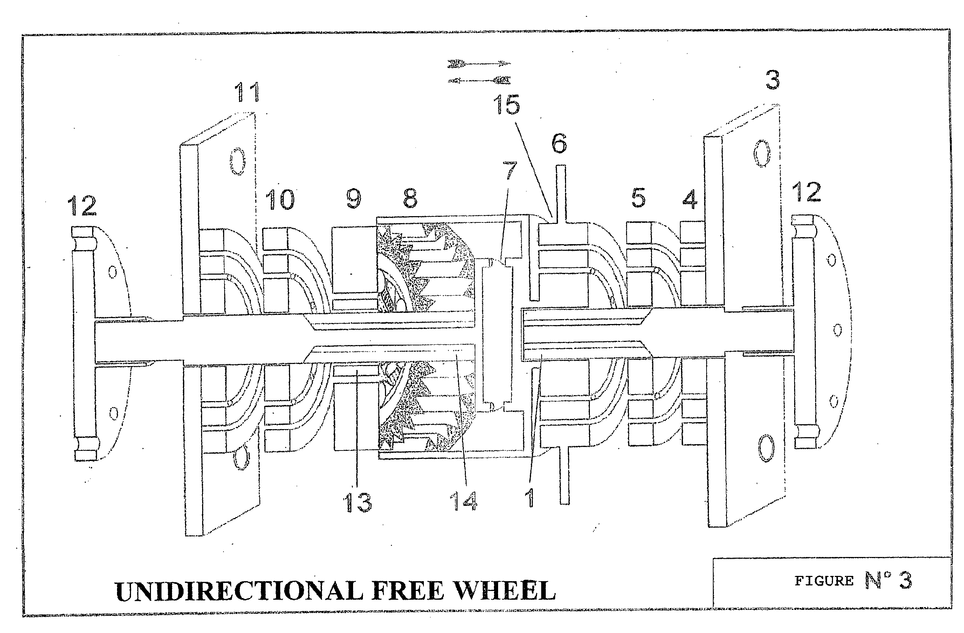

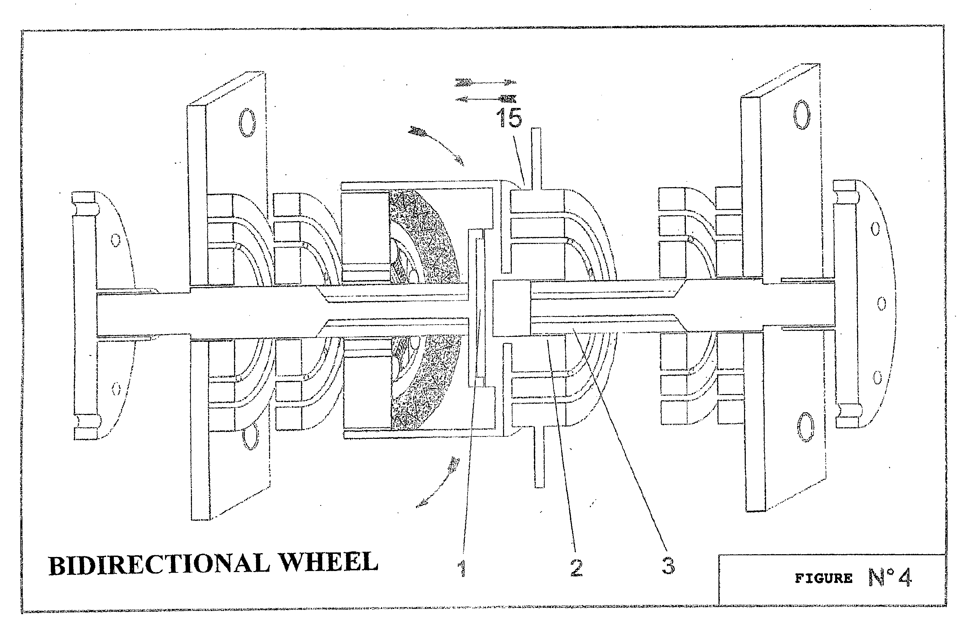

The shaft, separated into two, provided of toothed flanges in order to join and disjoin the shaft that modifies the unidirectional free wheel into bidirectional wheel and vice versa (tav. 4 fig. 1) and (tav. 3 fig. 7), through the dual control switchman (tav. 2 fig. 3), joined to a compressed air cylinder (tav. 2 fig. 2), which controls the double effect cylinder (tav. 2 fig. 4), makes the balancer move both forward and backward (tav. 2 fig. 7), through pins (tav. 2 fig. 8) and makes a thrust bearing move axially (tav. 3 fig. 6) joined to the splined hub of the sprocket inside , that unites the main shaft, provided of toothed flanges (tav. 4 fig. 1), to make the shaft turn, that allows the operation of the bidirectional wheel that makes the motor vehicle move, both forward and in reverse and, downhill, through the gear ratio of gears, slows the motor vehicle.

### ANALYSIS OF ACHIEVEMENT

The unidirectional and bidirectional free wheel (tav. 2 fig. 1) consists of:
- Compressed air cylinder (tav. 2 fig. 2) powered by a compressor connected to the motor that you cannot see (tav. 2 fig. 3)
- Dual control switchman (tav. 2 fig. 4)
- Double effect cylinder (tav. 2 fig. 5)
- Fork bolts (tav. 2 fig. 6)
- Head of the fork (tav. 2 fig. 7)
- Crown (tav. 2 fig. 8)
- Control pins of the thrust bearing (tav. 2 fig. 12)
- Rubber joints of coupling (tav.3 fig. 3)
- Bearing flange (tav. 3 fig. 4)
- Bearing (tav. 3 fig. 5)
- Bearing (tav. 3 fig. 6)
- Thrust bearing (tav. 3 fig. 15)
- Thrust bearing for the two- way movement in order to join and to disjoin, through the toothed flange coupling, the shaft of the unidirectional free wheel united for the rotation (tav. 3 fig. 7) and toothed flange coupling of the shaft separated into two (tav. 3 fig. 8)
- Sproken inside provided of splined hub (tav. 4 fig. 2) and (tav. 3 fig. 9)
- Unidirectional free wheel endowed with mechanism (tav.3 fig. 10)
- Bearing (tav. 3 fig. 11)
- Bearing flange (tav. 3 fig. 13)
- Unidirectional free wheel hub (tav. and fig. 14)
- Jagged shaft (tav. 3 fig. 1)
- Jagged shaft (tav. 3 fig. 12)
- Rubber joints of coupling (tav.4 fig. 1) and flanges that join the shaft (tav. 4 fig. 3) and (tav. 3 fig. 14) that make it united, changing it into unidirectional wheel.

### OPERATION OF THE UNIDIRECTIONAL AND BIDIRECTIONAL FREE WHEEL

The jagged shaft, provided of toothed flanges, is divided into two (tav. 3 fig. 7) and it allows the unidirectional free wheel to make the motor vehicle move only in a direction for inertia and unidirectional free wheel.

It is connected through Rubber joints (tav. 1 fig. 12) to the shaft (tav. 1 fig. 5) among the engine, the gearbox and the wheel engine (tav. 1 fig. 8) and it makes the shaft turn (tav. 1 fig. 12) joined to the unidirectional free wheel (tav. 1 fig. 5) which makes the jagged shaft turn (tav. 3 fig. 1) that, through thrust bearing (tav. 3 fig. 6) joined to the splined hub of the sprocket inside, it makes the mechanism of the free wheel turn (tav. 3 fig. 9). In turn, it lets the hub turn, (tav. 3 fig. 13) that, coupled with the jagged shaft (tav. 3 figs. 14), it makes the rubber joint turn(tav.3 fig. 12) which coupled through the rubber joint (tav. 1 fig. 12) to the wheel engine (tav. 1 fig. 8), it makes the motor vehicle move at speed and at unidirectional free wheel.

### ADVANTAGE OF THE MECHANISM OF THE UNIDIRECTIONAL FREE WHEEL

It allows, during the acceleration of the engine that increases speed, to join automatically, for speed difference, the wheel engine of the motor vehicle to make them turn and to make the motor vehicle move at speed and for inertia, without the intervention of the engine; when the driver decelerates, the engine speed decreases and the wheel engine increases speed and disjoins from the engine and the motor vehicle keeps on moving for inertia and at free wheel, economizing fuel.

This system used by the driver of the motor vehicle to accelerate and to decelerate the engine, allows, en route, to economize a great quantity of fuel and to pollute the environment less.

The operation of the bidirectional wheel (tav. 2 fig. 3) is the following: the compressed air cylinder (tav. 2 fig. 2) powered by a compressor connected to the motor, that you cannot see, (tav. 2 fig. 3)connected to the engine, that controls the double effect cylinder (tav. 2 fig. 4) which makes the balancer move the wheel both forward and backward (tav. 2 fig. 7); through some pins (tav. 2 fig. 8), it makes a thrust bearing move axially (tav. 3 fig. 6) and makes the splined hub of the sprocket inside move provided of a splined hub that flows on the jagged shaft (tav. 4 fig. 3) to join the shaft through toothed flanges (tav. 4 figs. 1)and to make the bidirectional wheel turn in order to move the motor vehicle both forward, backward and downhill, through the gear ratio of gears to slow the motor vehicle.

## Claims

1. Unidirectional and two-way free wheel (5-Tav.1) that, applied to the tree of transmission of the motor vehicle, economizes fuel. It is connected to the tree of transmission, through joints of matching (12-Tav.1), to make the engine wheels (8-Tav.1) of the motor vehicle turn, through the motor strength. The motor vehicle, endowed with free wheel, purchases inertial strength and it moves with speed without the intervention of the motor, economizing fuel.

2. Unidirectional and two-way free wheel (5-Tav. 1) that, applied to the tree of transmission of the motor vehicle, economizes fuel according to the assertion 1, **characterized by** the fact to be climbed on between the gear (6-Tav.1) and the engine wheels (8-Tav. 1).

3. Unidirectional and two-way free wheel (5-Tav. 1) that, applied to the tree of transmission of the motor vehicle, economizes fuel according to one of the preceding assertions **characterized by** the joining among the gear (6-Tav. 1) and the primary tree (1-Tav.3), to make the mechanism turn at free wheel.

4. Unidirectional and two-way free wheel (5-Tav.1) that, applied to the tree of transmission of the motor vehicle, economizes fuel according to one of the preceding assertions **characterized by** the fact to be endowed with an air compressed mechanism (2,3,4,5,6,7,8-Tav.2) necessary to connect the primary tree (3-Tav.3) to make the free wheel work in two-direction way, in order to allow the motor vehicle to go both forward and back and to act as a motor-brake in descent.

5. Unidirectional and two-way free wheel (5-Tav.1) that, applied to the tree of transmission of the motor vehicle, economizes fuel according to one of the preceding assertions **characterized by** the fact to be endowed with an air compressed mechanism (2,3,4,5,6,7,8-Tav.2) necessary to unconnect the primary tree (3-Tav.3) to make the free wheel work in a unidirectional way, in order to allow the motor vehicle to go forward and back exploiting the strength of inactivity and economizing fuel.

6. Unidirectional and two-way free wheel (5-Tav. 1) that, applied to the tree of transmission of the motor vehicle, economizes fuel according to one of the preceding assertions **characterized by** the fact to be endowed with toothed bridles (7-Tav.3) (1-Tav.4) in order to allow the two-way joining (1-Tav.4) and the unidirectional uncoupling (7-Tav.3).

7. Unidirectional and two-way free wheel (5-Tav.1) that, applied to the tree of transmission of the motor vehicle, economizes fuel according to one of the preceding assertions **characterized by** the fact to be endowed with a toothed crown in the inside (8-Tav.3) and a keyed hub that flows on the primary tree (1-Tav.3) always in a strict contact with the free wheel (8, 9-Tav.3) and when it has to modify the wheel in a two-way wheel, the toothed crown in the inside (8-Tav.3), through the collar bearing (15-Tav.3), it effects an axial movement to go and connect the toothed fbridles (1-Tav.4) to make the two-way wheel work.
